# EUROPÄISCHE PATENTSCHRIFT

(11) **EP 3 102 306 B1**
(45) Veröffentlichungstag und Bekanntmachung des Hinweises auf die Patenterteilung: **18.10.2017**
(21) Anmeldenummer: 15701015.8
(22) Anmeldetag: 23.01.2015
(51) Int. Cl.: B01D 46/24, B01D 46/10, B01D 46/12

(54) **FILTERELEMENT, INSBESONDERE LUFTFILTERELEMENT**
FILTER ELEMENT, IN PARTICULAR AIR FILTER ELEMENT
ÉLÉMENT FORMANT FILTRE, EN PARTICULIER ÉLÉMENT FORMANT FILTRE À AIR

(30) Priorität: 05.02.2014 DE 102014202094
(43) Veröffentlichungstag der Anmeldung: 14.12.2016
(73) Patentinhaber: Mahle International GmbH, 70376 Stuttgart (DE)
(72) Erfinder: HÄUSLER, Ingo, 73733 Esslingen (DE); KAISER, Stefan, 71686 Remseck (DE); KNAUSS, Rüdiger, 71394 Kernen i. R. (DE); RUDOLPH, Gerhard, 70469 Stuttgart (DE); WAIBEL, Hans, 71686 Remseck Aldingen (DE)
(74) Vertreter: BRP Renaud & Partner mbB Rechtsanwälte Patentanwälte Steuerberater
(86) Internationale Anmeldenummer: PCT/EP2015/051306
(87) Internationale Veröffentlichungsnummer: WO 2015/117837

(56) Entgegenhaltungen:
- WO-A1-2008/141945
- DE-A1-102011 083 657
- DE-A1-102012 012 349

## Beschreibung

Die vorliegende Erfindung betrifft ein Filterelement, insbesondere ein Luftfilterelement für eine Frischluftanlage einer Brennkraftmaschine oder für eine Belüftungs- und/oder Klimatisierungseinrichtung eines Kraftfahrzeugs, mit den Merkmalen des Oberbegriffs des Anspruchs 1. Die Erfindung betrifft außerdem ein Verfahren zum Herstellen eines derartigen Filterelements.

Ein derartiges Luftfilterelement ist aus der WO 2008/141945 A1 bekannt. Es umfasst einen Filterkörper aus einem gefalteten Filtermaterial, der einen Innenraum des Filterelements bis auf einen Seitenbereich seitlich einfasst. Eine erste Endplatte und eine zweite Endplatte sind am Filterkörper an voneinander abgewandten Seiten dicht befestigt. Ferner ist eine Stirnplatte vorgesehen, die im Seitenbereich angeordnet ist und die einen Anschlussstutzen zum Zuführen oder Abführen von Luft aufweist. Beim bekannten Filterelement ist die Stirnplatte an die Endplatten angeklebt und/oder mit diesen verclipst. Ferner ist die Stirnplatte an den Filterkörper angeklebt oder angeschäumt. Bei einer alternativen Ausführungsform kann dagegen vorgesehen sein, die Stirnplatte integral mit wenigstens einer der Endplatten auszugestalten.

Der Seitenbereich bildet eine offene Seite des Filterkörpers, die mit Hilfe der Stirnplatte hinreichend dicht verschlossen werden muss, um Fehlströmungen zu vermeiden. Dabei muss diese Anbindung auch bei dauerhaft auftretenden, höheren mechanischen und/oder thermischen Belastungen, die aufgrund von Vibrationen und Erschütterungen auftreten können, bzw. der Strahlungswärme der Brennkraftmaschine eine zuverlässige Abdichtung gewährleisten.

Die vorliegende Erfindung beschäftigt sich mit dem Problem, für ein derartiges Filterelement, insbesondere Luftfilterelement, eine verbesserte Ausführungsform anzugeben, die sich insbesondere durch eine hohe Zuverlässigkeit der dichten Anbindung der Stirnplatte an die Endplatten und an den Filterkörper auszeichnet, wobei gleichzeitig eine einfache und preiswerte Herstellbarkeit angestrebt ist.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Stirnplatte bezüglich der beiden Endplatten als separates Bauteil herzustellen und die Stirnplatte sowohl mit den beiden Endplatten als auch mit dem Filterkörper mittels eines thermischen Verfahrens fest und hinreichend dicht zu verbinden. Hierzu wird die Stirnplatte in zwei der jeweiligen Endplatte zugeordneten Endplattenverbindungsbereichen mit stirnseitigen Enden der beiden Endplatten verschmolzen, also stoffschlüssig verbunden. Ferner wird die Stirnplatte in zwei Endfaltenverbindungsbereichen mit zwei Endfalten des Filterkörpers mittels Plastifizierung verbunden. Hierzu werden die Endfaltenverbindungsbereiche der Stirnplatte erwärmt und insbesondere angeschmolzen bis sich eine hinreichende Plastifizierung einstellt. Anschließend kann der Filterkörper mit seinem jeweiligen Ende gegen den jeweiligen Endfaltenverbindungsbereich angedrückt werden, wodurch das Filtermaterial in den plastifizierten Kunststoff der Stirnplatte eintauchen kann. Hierdurch wird am jeweiligen Ende des Filterkörpers zumindest die jeweilige Endfalte in die Stirnplatte einplastifiziert.

Die beiden Enden des Filterkörpers begrenzen den Seitenbereich seitlich. Die stirnseitigen Enden der beiden Endplatten begrenzen den Seitenbereich quer zu den Enden des Filterkörpers, wodurch der Seitenbereich durch die beiden Enden des Filterkörpers und die beiden stirnseitigen Enden der beiden Endplatten in einer Umfangsrichtung vollständig eingefasst ist. Die so gebildete Einfassung des Seitenbereichs ist über die Verbindungsbereiche der Stirnplatte gegenüber der Stirnplatte abgedichtet, wodurch die Gefahr von Fehlströmungen reduziert ist. Somit sind Leckageströmungen zuverlässig verhindert.

Bei einer besonderen Ausführung des erfindungsgemäßen Filterelementes ist im Seitenbereich eine Öffnung für einen Anschluss des Filterinnenraums an einem Anschlussstutzen vorgesehen. Somit ist der Seitenbereich als Anschlussbereich ausgeführt.

Gemäß einer alternativen Ausgestaltung ist der Seitenbereich geschlossen ausgeführt und der Anschluss des Filterinnenraums an den Anschlussstutzen ist in einer der Endplatten angeordnet. Bei weiteren Ausgestaltungen kann sowohl der Seitenbereich, als auch eine der Endplatten über einen Anschluss verfügen. Hierbei kann einer der Anschüsse erheblich kleiner dimensioniert sein, als der andere und z.B. als Sekundärluftanschluss verwendet werden.

Zum Verschmelzen des jeweiligen Endplattenverbindungsbereichs mit dem zugehörigen stirnseitigen Ende der jeweiligen Endplatte werden die Endplattenverbindungsbereiche und die stirnseitigen Enden erwärmt und insbesondere angeschmolzen bis eine ausreichende Plastifizierung erreicht ist, die bei einem Andrücken der Stirnplatte an die Endplatten die gewünschte stoffschlüssige Fusions- oder Schmelzverbindung zwischen der Stirnplatte und den Endplatten ermöglicht.

Die hier vorgeschlagenen thermischen Verbindungsverfahren lassen sich mit hoher Prozesssicherheit durchführen, so dass die gewünschten Verbindungen mit hoher Zuverlässigkeit und ausreichender Dichtigkeit einfach auch im Rahmen einer Serienproduktion realisierbar sind.

Erfindungsgemäß ist der jeweilige Endplattenverbindungsbereich an einem Randbereich der Stirnplatte ausgebildet und weist einen vom Randbereich bezüglich einer Längsmittelachse des Anschlussstutzens axial abstehenden Verbindungssteg aufweisen, der mit dem stirnseitigen Ende der jeweiligen Endplatte bezüglich der Längsmittelachse des Anschlussstutzens axial verschmolzen ist. Der jeweilige Verbindungssteg definiert dadurch den anzuschmelzenden Bereich der Stirnplatte, nämlich das freistehende Ende des Verbindungsstegs. Hierdurch ist nur ein vergleichsweise geringes Volumen an Kunststoff anzuschmelzen, wodurch die hierzu benötigte Energie reduziert ist. Des Weiteren lässt sich ein axiales Andrücken der Stirnplatte an die beiden Endplatten vergleichsweise einfach realisieren.

Die jeweilige Endplatte kann an ihrem stirnseitigen Ende jeweils einen quer zur Längsmittelachse des Anschlussstutzens abgewinkelten Kragen aufweisen, der mit dem Verbindungssteg verschmolzen ist. Durch die Bereitstellung eines derartigen Kragens lassen sich auch vergleichsweise große Fertigungstoleranzen einfach beherrschen. Ferner kann sich an einer von der Stirnplatte abgewandten Seite des jeweiligen Kragens ein Werkzeug abstützen, um das Andrücken der Stirnplatte an die beiden Endplatten zu vereinfachen.

Bei einer anderen Ausführungsform kann der jeweilige Endfaltenverbindungsbereich in einem der jeweiligen Endplatte zugewandten Randbereich bezüglich einer Längsmittelachse des Anschlussstutzens radial mit der jeweiligen Endplatte verschmolzen sein. Hierdurch wird eine dichte Anbindung des jeweiligen Endfaltenverbindungsbereichs an die Endplatten realisiert, so dass die dichte Anbindung der Stirnplatte an die Endplatten und an den Filterkörper an der Stirnplatte in der Umfangsrichtung unterbrechungsfrei erfolgt.

Bei einer vorteilhaften Weiterbildung kann vorgesehen sein, dass die Randbereiche der Endfaltenverbindungsbereiche vom jeweiligen Verbindungssteg des jeweiligen Endplattenverbindungsbereichs in radialer und/oder axialer Richtung beabstandet sind. Hierdurch kann eine Kollision der axialen und radialen Schmelzverbindungszonen vermieden werden.

Bei einer anderen Ausführungsform können die beiden Endfaltenverbindungsbereiche ausgehend von der Stirnplatte bezüglich einer Längsmittelachse des Anschlussstutzens axial über die beiden Endplattenverbindungsbereiche vorstehen. Hierdurch können die Endfaltenverbindungsbereiche zum Einplastifizieren der Enden des Filterkörpers relativ weit in den Filterkörper, also zwischen die Endplatten, eintauchen. Gleichzeitig wird dadurch auch erreicht, dass die axial wirkenden Schmelzverbindungsstellen und die gegebenenfalls vorhandenen radial wirkenden Schmelzverbindungsstellen axial voneinander beabstandet sind.

Die Falten des gefalteten Filtermaterials des Filterkörpers verlaufen zweckmäßig parallel zueinander. Quer zur Faltenlängsrichtung besitzt der Filterkörper zwei Endseiten, die von den beiden Endplatten abgedeckt sind. Zweckmäßig ist der Filterkörper an diesen Endseiten in die Endplatten einplastifiziert. Somit ist auch in diesem Bereich eine hinreichende Abdichtung zuverlässig realisiert.

Die beiden Endplatten sind voneinander beabstandet und insoweit separate Bauteile. Gemäß einer besonderen Ausgestaltung sind beide Endplatten als geschlossene Endplatten konzipiert, so dass sie die jeweilige Endseite des Filterkörpers vollständig verschließen. Bei einer alternativen Ausgestaltung verfügt zumindest eine der Endplatten über eine Öffnung, die als Ein- oder Auslass für das zu reinigende bzw. gereinigte Fluid ausgestaltet ist. Bei einer derartigen Ausgestaltung kann dann die Stirnplatte geschlossen, also ohne Ein- bzw. Auslass ausgeführt werden. Somit kann das Filterelement in geeigneter Weise an den zur Verfügung stehenden Bauraum angepasst werden. Bei einer anderen Ausführung kann sowohl eine Endplatte, wie auch die Stirnplatte über eine Öffnung verfügen. Somit kann entweder der gereinigte Volumenstrom in zwei Strömungswege (z.B. Primärluft und Sekundärluft) aufgeteilt oder der zu reinigende Volumenstrom von zwei Strömungswegen zusammengeführt werden. Gemäß einer bevorzugten Ausführungsform sind die beiden Endplatten auch im Innenraum nicht aneinander abgestützt. Somit sind, bei ausreichender Steifigkeit der Endplatten, keine die Strömung störenden Geometrien vorhanden. Bei Endplatten mit geringer Steifigkeit können jedoch zur Erreichung der erforderlichen Steifigkeit auch im Innenraum angeordnete Abstützungen der Endplatten aneinander vorgesehen sein.

Bei einer anderen vorteilhaften Ausführungsform können die beiden Endplatten im Bereich des Filterkörpers voneinander einen Abstand aufweisen, der kleiner ist als eine parallel zum Abstand gemessene Öffnungsweite des Anschlussstutzens. Hierdurch kann für den Anschlussstutzen ein vergleichsweise großer Öffnungsquerschnitt realisiert werden, was entsprechend große Volumenströme durch das Filterelement ermöglicht.

Zumindest eine der Endplatten kann in einem der Stirnplatte zugewandten Endbereich eine Ausbuchtung aufweisen, die vom Innenraum nach außen von der übrigen Endplatte absteht. Hierdurch ist es besonders einfach möglich, den Abstand zwischen den beiden Endplatten im Anschlussbereich zu vergrößern, wodurch es insbesondere möglich ist, eine Anschlussöffnung mit großem Öffnungsquerschnitt gemäß der vorstehend beschriebenen Art zu verwenden.

Üblicherweise sind innerhalb des Filterkörpers die einzelnen Falten gleich breit, so dass der Filterkörper von seinem ersten Ende bis zu seinem zweiten Ende in der Regel eine konstante Höhe besitzt. Dementsprechend besitzt auch die zugehörige Endplatte einen im Wesentlichen ebenen Filterkörperverbindungsbereich. Zweckmäßig kann nun das der Stirnplatte zugewandte stirnseitige Ende der mit der Ausbuchtung versehenen Endplatte zwischen den Enden des ebenen Filterkörperverbindungsbereichs einen bezüglich des Innenraums nach außen gewölbten Bereich besitzen. Der zugehörige Endplattenverbindungsbereich der Stirnplatte kann nun dazu komplementär geformt sein.

Zweckmäßig kann vorgesehen sein, dass nur eine der beiden Endplatten mit einer derartigen Ausbuchtung ausgestattet ist, während die andere Endplatte dann im Wesentlichen eben konfiguriert ist. Alternativ ist es grundsätzlich ebenso möglich, beide Endplatten mit einer derartigen bzw. mit unterschiedlichen Ausbuchtungen auszustatten.

Bei anderen Ausgestaltungen kann die Faltenbreite und/oder Faltenhöhe variieren. Somit ergibt sich eine unebene Filterkörperstruktur, welche durch eine ebenfalls unebene Endplatte abgeschlossen ist. Somit kann der Filtereinsatz an beliebig ausgestaltete Bauräume adaptiert werden.

Der Öffnungsquerschnitt des Anschlussstutzens kann kreisförmig sein. Bevorzugt ist er jedoch oval, wobei der größere Durchmesser quer zur Abstandsrichtung der beiden Endplatten verläuft.

Die jeweilige Endplatte besitzt einen Außenbereich, der mit dem Filterkörper verbunden ist. Dieser Außenbereich besitzt an der dem Filterkörper zugewandten Seite den zuvor genannten Filterkörperverbindungsbereich. Der Außenbereich erstreckt sich dabei von der einen Seite der Stirnplatte bis zur anderen Seite der Stirnplatte. Dabei bildet der Außenbereich mit dem zugehörigen stirnseitigen Ende eine seitliche Einfassung eines Innenbereichs der jeweiligen Endplatte. Dieser Innenbereich kann zur intensiven Aussteifung der jeweiligen Endplatte verrippt sein. Dabei ist eine Längsverrippung oder eine Querverrippung oder eine Kreuzverrippung mit Quer- und Längsrippen denkbar.

Bei einer anderen Ausführungsform kann die jeweilige Endfalte eine Perforation aufweisen, die vom Kunststoff des jeweiligen Endfaltenverbindungsbereichs durchsetzt ist. Durch diese Maßnahme kann beim Anpressen des plastifizierten Endfaltenverbindungsbereichs der Kunststoff der Stirnplatte die jeweilige Endfalte in der Perforation durchdringen. Anschließend ist die Endfalte in den Kunststoff des Endfaltenverbindungsbereichs eingebettet. Hierdurch ergibt sich eine besonders intensive Verankerung des Filtermaterials im Kunststoff der Stirnplatte.

Ein erfindungsgemäßes Verfahren zum Herstellen eines derartigen Luftfilterelements sieht vor, dass zunächst die beiden Endplatten am Filterkörper befestigt werden. Dies kann mittels Plastifizierung erfolgen. Grundsätzlich sind jedoch hier auch andere Befestigungsmethoden denkbar. Anschließend, jedoch vor dem Montieren der Stirnplatte, werden im Anschlussbereich die stirnseitigen Enden der Endplatten und die Endplattenverbindungsbereiche der Stirnplatte sowie die Endfaltenverbindungsbereiche der Stirnplatte erwärmt und dadurch plastifiziert, also in einen plastischen Zustand überführt und insbesondere angeschmolzen. Anschließend kann nun die Stirnplatte im Anschlussbereich an die Enden der Endplatten und an die Enden des Filterkörpers angesetzt werden, derart, dass die Enden der Endplatten mit den Endplattenverbindungsbereichen verschmelzen und die Endfalten des Filterkörpers in die Endfaltenverbindungsbereiche einplastifizieren. Zweckmäßig erfolgt das Ansetzen der Stirnplatte mit einem vorbestimmten Anpressweg, um das Verschmelzen bzw. das Einplastifizieren zu unterstützen. Alternativ kann das Ansetzen auch durch einen vorbestimmten Anpressdruck gesteuert sein.

Entsprechend einer vorteilhaften Ausführungsform kann der jeweiligen Endfaltenverbindungsbereich der Stirnscheibe bzw. Stirnplatte vor dem Anschmelzen eine dreidimensionale Aufschmelzkontur aufweisen. Eine derartige Aufschmelzkontur kann beispielsweise durch Rillen oder Nocken oder durch eine Prägung realisiert sein und unterscheidet sich somit von einer glatten, ebenen Struktur. Eine derartige dreidimensionale Aufschmelzkontur schafft eine vergrößerte Oberfläche, wodurch eine gleichmäßig tiefe und homogene Aufschmelzung des Endfaltenverbindungsbereiches erreicht werden kann.

Eine Rillierung oder Nockung des Filtermediums vergrößert die Verbindungsfläche und trägt somit zu einer verbesserten Verbindung bei.

Bei einer anderen vorteilhaften Ausführungsform kann die jeweilige Endfalte eine Perforation aufweisen, die beim Ansetzen der Stirnplatte vom Kunststoff des jeweiligen Endfaltenverbindungsbereichs durchsetzt wird. Hierdurch wird eine besonders intensive Verbindung zwischen Stirnplatte und Filtermaterial erreicht.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine Draufsicht auf ein Luftfilterelement,
- Fig. 2: eine Seitenansicht des Luftfilterelements, entsprechend einer Blickrichtung II in Fig. 1,
- Fig. 3: eine Frontansicht des Luftfilterelements entsprechend einer Blickrichtung III in Fig. 1,
- Fig. 4: ein Längsschnitt des Luftfilterelements entsprechend Schnittlinien IV in Fig. 3,
- Fig. 5: ein vergrößertes Detail V aus Fig. 4,
- Fig. 6: eine Schnittansicht des Luftfilterelements im Bereich einer Stirnplatte entsprechend Schnittlinien VI in Fig. 1,
- Fig. 7: ein vergrößertes Detail VII aus Fig. 6,
- Fig. 8: eine Schnittansicht des Luftfilterelements im Bereich der Stirnplatte entsprechend Schnittlinien VIII in Fig. 1,
- Fig. 9: ein vergrößertes Detail IX aus Fig. 8,
- Fig. 10: eine isometrische Ansicht des Luftfilterelements,, jedoch bei einer nicht erfindungsgemäßen, anderen Ausführungsform,
- Fig. 11: eine Schnittansicht des Luftfilterelements aus Fig. 10 gemäß Schnittlinien XI.

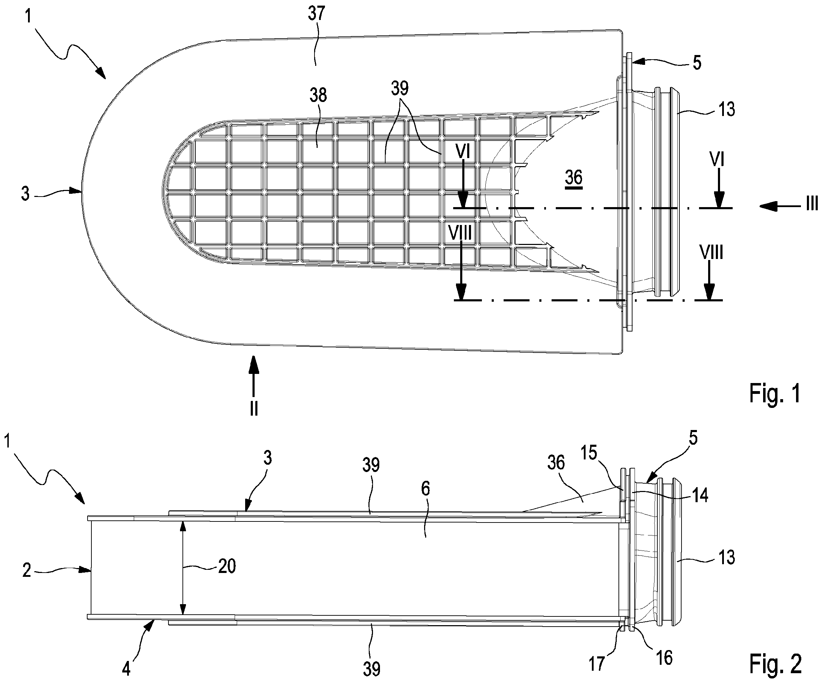

Entsprechend den Figuren 1 bis 11 umfasst ein Luftfilterelement 1, das bei einer Brennkraftmaschine in einer Frischluftanlage oder bei einem Fahrzeug in einer Belüftungs- und/oder Klimatisierungsanlage zur Anwendung kommen kann, einen Filterkörper 2, eine erste Endplatte 3, eine zweite Endplatte 4 und eine Stirnplatte 5. Der Filterkörper 2 besteht aus einem gefalteten Filtermaterial 6 und umschließt einen Innenraum 7 des Filterelements 1 bis auf einen seitlichen Seitenbereich 8, der in dem Beispiel der Fig. 1 bis 9 als Anschlussbereich ausgestaltet ist, der im Folgenden ebenfalls mit dem Bezugszeichen 8 bezeichnet werden kann. Beim hier gezeigten Beispiel ist der Filterkörper 2 im Wesentlichen U-förmig gestaltet. Der Filterkörper 2 besitzt zwei Enden, nämlich ein erstes Ende 9 und ein zweites Ende 10, in denen das Filtermaterial 6 jeweils eine Endfalte aufweist, nämlich im ersten Ende 9 eine erste Endfalte 11 und im zweiten Ende 10 eine zweite Endfalte 12. Die Enden 9, 10 begrenzen den Anschlussbereich 8 seitlich. Die beiden Endplatten 3, 4 sind an voneinander abgewandten Seiten oder Endseiten des Filterkörpers 2 am Filterkörper 2 dicht befestigt. Bevorzugt ist dabei der Filterkörper 2 an seinen Endseiten in die beiden Endplatten 3, 4 einplastifiziert.

Die Stirnplatte 5 ist im Anschlussbereich 8 angeordnet und weist bei der in den Fig. 1 bis 9 gezeigten Ausführungsform einen Anschlussstutzen 13 auf, der integral an der Stirnplatte 5 ausgeformt ist. Durch den Anschlussstutzen 13 kann je nach Durchströmungsrichtung des Filterkörpers 2 Luft zum Innenraum 7 zugeführt oder aus dem Innenraum 7 abgeführt werden.

Die Stirnplatte 5 weist einen der ersten Endplatte 3 zugeordneten ersten Endplattenverbindungsbereich 14 auf, der mit einem der Stirnplatte 5 zugewandten stirnseitigen Ende 15 der ersten Endplatte 3 verschmolzen ist. Die Stirnplatte 5 weist außerdem einen der zweiten Endplatte 4 zugeordneten zweiten Endplattenverbindungsbereich 16 auf, der mit einem der Stirnplatte 5 zugewandten stirnseitigen Ende 17 der zweiten Endplatte 4 verschmolzen ist. Über die beiden Endplattenverbindungsbereiche 14, 16 ist die Stirnplatte 5 somit fest und dicht mit den beiden Endplatten 3, 4 verbunden.

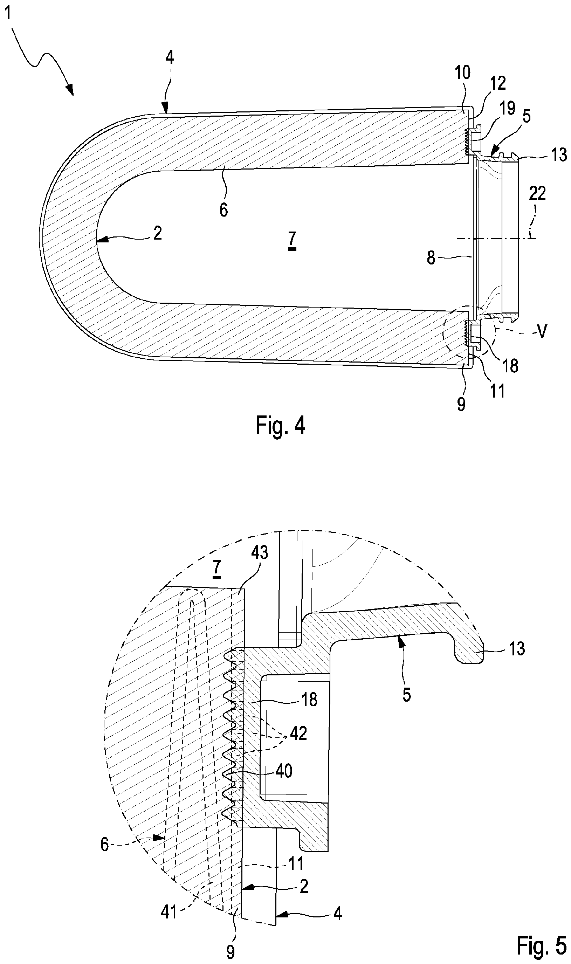

Des Weiteren weist die Stirnplatte 5 einen ersten Endfaltenverbindungsbereich 18 auf, der dem ersten Ende 9 des Filterkörpers 2 zugeordnet ist und in den zumindest die erste Endfalte 11 einplastifiziert ist. Die Stirnplatte 5 weist außerdem einen zweiten Endfaltenverbindungsbereich 19 auf, der dem zweiten Ende 10 des Filterkörpers 2 zugeordnet ist und in den zumindest die zweite Endfalte 12 einplastifiziert ist. Über die beiden Endfaltenverbindungsbereiche 18, 19 ist die Stirnplatte 5 somit fest und dicht mit dem Filterkörper 2 verbunden. Hierzu erstreckt sich der jeweilige Endfaltenverbindungsbereich 18, 19 zweckmäßig über die gesamte Höhe des Filterkörpers 2, die durch den Abstand der beiden Endplatten 3, 4 definiert und in Figur 2 durch einen mit 20 bezeichneten Doppelpfeil angedeutet ist. Je nach Faltung der jeweiligen Endfalte 11,12 kann außerdem eine unmittelbar an die jeweilige Endfalte 11, 12 anschließende, vorletzte Falte 41 ebenfalls zumindest teilweise mit in die Stirnplatte 5 einplastifiziert sein. In Fig. 5 sind die letzte Falte bzw. Endfalte 11 und die vorletzte Falte 41 mit unterbrochener Linie innerhalb des Filterkörpers 2 angedeutet, der im Übrigen vereinfacht als massiver Block dargestellt ist.

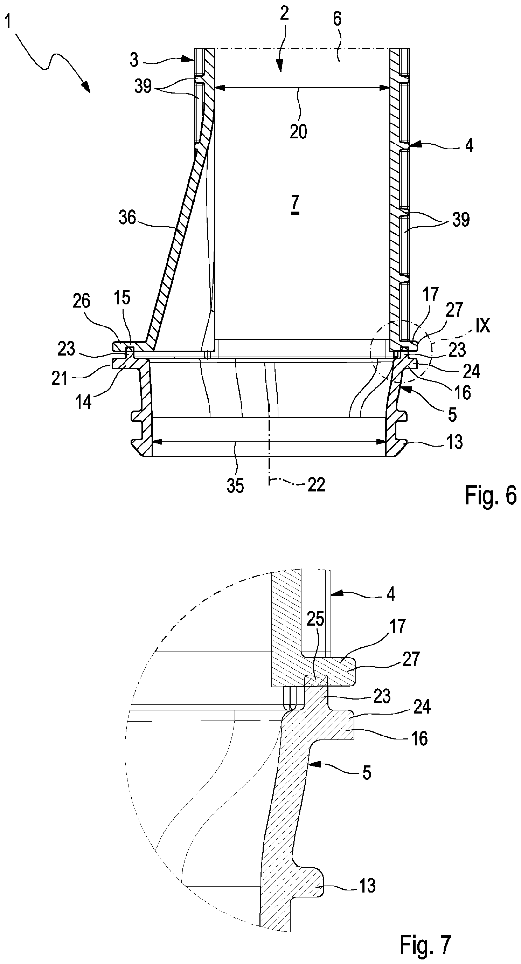

Wie sich insbesondere den Figuren 6 und 7 entnehmen lässt, kann der erste Endplattenverbindungsbereich 14 an einem ersten Randbereich 21 der Stirnplatte 5 ausgebildet sein und einen vom ersten Randbereich 21 bezüglich einer Längsmittelachse 22 des Anschlussstutzens 13 axial abstehenden Verbindungssteg 23 aufweisen. Dieser Verbindungssteg 23 ist mit dem stirnseitigen Ende 15 der ersten Endplatte 3 axial verschmolzen. Entsprechendes gilt auch für den zweiten Endplattenverbindungsbereich 16, der in Fig. 7 vergrößert dargestellt ist. Erkennbar ist auch der zweite Endplattenverbindungsbereich 16 an einem zweiten Randbereich 24 der Stirnplatte 5 ausgebildet und ebenfalls mit einem axial abstehenden Verbindungssteg 23 ausgestattet, der mit dem entsprechenden stirnseitigen Ende 17 der zweiten Endplatte 4 axial verschmolzen ist. Der Verbindungssteg 23 bildet eine geschlossene Kontur mit den Endfaltenverbindungsbereichen 18, 19. In Figur 7 ist dabei eine Schmelzverbindungszone 25 angedeutet, in welcher der Verbindungssteg 23 quasi in den Werkstoff der zweiten Endplatte 4 eintaucht, indem also die Verschmelzung bzw. die Stoffschlussverbindung stattfindet.

Die jeweilige Endplatte 3, 4 weist am zugehörigen stirnseitigen Ende 15, 17 jeweils einen quer zur Längsmittelachse 22 des Anschlussstutzens 13 abgewinkelten Kragen 26 bzw. 27 auf, wodurch eine Art Flansch geschaffen wird, der auch bei größeren Herstellungstoleranzen vom jeweiligen Steg 23 axial kontaktiert werden kann.

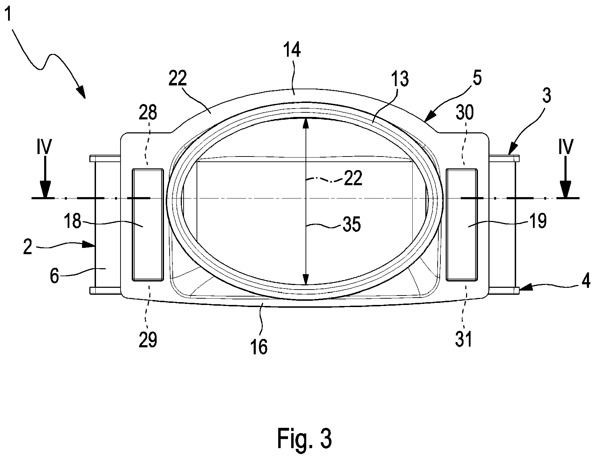

Entsprechend den Figuren 3 bis 9 ist der erste Endfaltenverbindungsbereich 18 in einem der ersten Endplatte 3 zugewandten ersten Randbereich 28 bezüglich der Längsmittelachse 22 des Anschlussstutzens 13 mit der ersten Endplatte 3 radial verschmolzen. Ferner ist der erste Endplattenverbindungsbereich 18 in einem der zweiten Endplatte 4 zugewandten zweiten Randbereich 29 mit der zweiten Endplatte 4 ebenfalls radial verschmolzen. Entsprechendes gilt hier auch für den zweiten Endfaltenverbindungsbereich 19, der einen der ersten Endplatte 3 zugewandten ersten Randbereich 30 aufweist, mit dem er mit der ersten Endplatte radial verschmolzen ist, sowie einen der zweiten Endplatte 4 zugewandten zweiten Randbereich 31 besitzt, mit dem er mit der zweiten Endplatte 4 radial verschmolzen ist. Somit sind die beiden Endfaltenverbindungsbereiche 18, 19 nicht nur mit dem Filterkörper 2 durch Plastifizierung fest und dicht verbunden, sondern auch über die Randbereiche 28, 29, 30, 31 mit den Endplatten 3, 4. Somit kann an der Stirnplatte 5 eine bezüglich der Längsmittelachse 22 in der Umfangsrichtung geschlossen umlaufende Kontaktierung zu den Endplatten 3, 4 und dem Filterkörper 2 geschaffen werden.

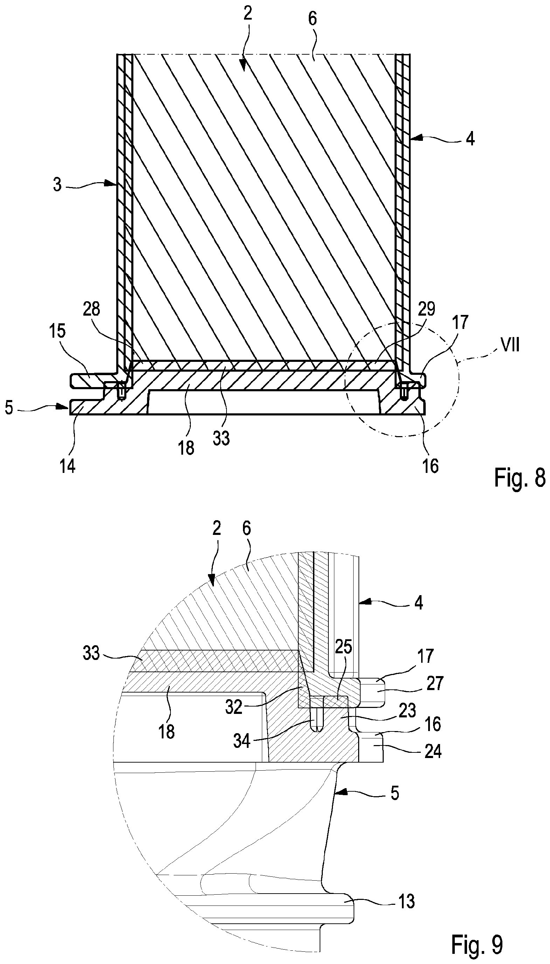

In der vergrößerten Detailansicht der Figur 9 ist repräsentativ für alle vier Randbereiche der zweite Randbereich 29 des ersten Endfaltenverbindungsbereichs 18 wiedergegeben. Angedeutet ist auch hier eine Schmelzverbindungszone 32, in welcher die Stirnplatte 5 quasi radial in den Werkstoff der zweiten Endplatte 4 eintaucht. In dieser Darstellung ist deutlich zu erkennen, dass der Randbereich 29 von dem Verbindungssteg 23 in radialer und axialer Richtung beabstandet ist. Erkennbar ist in den Figuren 8 und 9 außerdem ein Durchdringungsbereich 33 oder Einbettungsbereich 33, in dem die jeweilige Endfalte 11, 12 (hier die erste Endfalte 11) in dem Kunststoff der Stirnplatte 5 innerhalb des jeweiligen Endfaltenverbindungsbereichs 18, 19 (hier des ersten Endfaltenverbindungsbereichs 18) eingebettet ist. Um diese Einbettung zu verbessern bzw. um die Durchdringung des Kunststoffs des jeweiligen Endfaltenverbindungsbereichs 18, 19 mit dem Filtermaterial 6 des Filterkörpers 2 zu verbessern, kann vorgesehen sein, dass zumindest die jeweilige Endfalte 11, 12 mit einer Perforation 42 versehen ist, die dann beim Anbringen der Stirnplatte 5 vom Kunststoff der Stirnplatte 5 durchsetzt wird. In Fig. 5 ist eine derartige Perforation 42 innerhalb der Endfalte 11 angedeutet. Die Perforation 42 kann beispielsweise aus mehreren Löchern bestehen, durch die der aufgeschmolzene bzw. plastifizierte Kunststoff des Endfaltenverbindungsbereichs 18 einfach hindurchtreten kann. Insbesondere kann dadurch eine Plastifizierung des Endfaltenverbindungsbereichs 18 zusätzlich mit der vorletzten Falte 41 verbessert werden.

Außerdem ist in Fig. 5 eine bevorzugte Variante hinsichtlich der Orientierung der jeweiligen Endfalte 11 gezeigt, bei der eine Endkante 43 der jeweiligen Endfalte 11 dem Innenraum 7 zugewandt ist. Hierdurch ist die Gefahr einer Beschädigung des Filtermaterials 6 beim Montieren des Filterelements 1 reduziert. Alternativ könnte die Endfalte 11 auch so orientiert sein, dass ihre Endkante 43 vom Innenraum 7 abgewandt ist. Entsprechendes gilt dann auch für die andere, in Fig. 5 nicht dargestellte Endfalte 12. Wie sich Figur 5 ebenfalls entnehmen lässt, kann der jeweilige Endfaltenverbindungsbereich 18, 19 ausgehend von der Stirnplatte 5 bezüglich der Längsmittelachse 22 des Anschlussstutzens 13 axial über den ersten Endfaltenverbindungsbereich 18 bzw. über den zweiten Endfaltenverbindungsbereich 19 axial vorstehen.

Des Weiteren ist Figur 9 zu entnehmen, dass zwischen dem Verbindungssteg 23 und dem jeweiligen ersten oder zweiten Randbereich 28, 29, 30, 31 (hier der zweite Randbereich 29 des ersten Endfaltenverbindungsbereichs 18) eine Lücke 34 ausgebildet sein kann, um unerwünschte Wechselwirkungen zwischen den einzelnen Schmelzverbindungszonen 25, 32 zu vermeiden.

Im gezeigten Beispiel sind die beiden Endplatten 3, 4 jeweils als geschlossene Endplatten 3, 4 ausgestaltet, wodurch sie die jeweilige Endseite des Filterkörpers 2 vollständig abdecken. Ferner sind die beiden Endplatten 3, 4 im Bereich des Filterkörpers 2 voneinander beabstandet, wodurch sie den in Figur 2 eingezeichneten Abstand 20 besitzen. Wie sich insbesondere den Figuren 3 und 6 entnehmen lässt, ist dieser Abstand 20 kleiner als eine parallel zum Abstand 20 gemessene Öffnungsweite 35 des Anschlussstutzens 13. Zu diesem Zweck ist hier die erste Endplatte 3 in einem der Stirnplatte 5 zugewandten Endbereich mit einer Ausbuchtung 36 ausgestattet, die vom Innenraum 7 nach außen von der übrigen ersten Endplatte 3 absteht. Das zugehörige stirnseitige Ende 15 der ersten Endplatte 3 erhält dadurch einen nach außen gewölbten Bereich, der hier nicht näher bezeichnet ist. Der erste Endfaltenverbindungsbereich 14 ist dazu komplementär geformt, was in Figur 3 erkennbar ist. Ferner ist bemerkenswert, dass der Anschlussstutzen 13 einen in Figur 3 erkennbaren ovalen Öffnungsquerschnitt besitzt. Seine kleinste Öffnungsweite 35 erstreckt sich dabei parallel zum Abstand 20 der beiden Endplatten 3, 4.

Insbesondere Figur 1 lässt sich entnehmen, dass die jeweilige Endplatte 3, 4 jeweils einen Außenbereich 37 aufweist, der dem Verlauf des Filterkörpers 2 folgt und der mit der jeweiligen Endseite des Filterkörpers 2 fest verbunden ist. An der dem Filterkörper 2 zugewandten Seite besitzt dieser Außenbereich 37 somit einen nicht näher bezeichneten Filterkörperverbindungsbereich, in den das Filtermaterial 6 einplastifiziert sein kann. Der Außenbereich 37 erstreckt sich bei den beiden Endplatten 3, 4 jeweils ausgehend von der Stirnplatte 5 um den Innenraum 7 herum bis zurück zur Stirnplatte 5. Insoweit umschließt der Außenbereich 37 bei jeder Endplatte 3, 4 einen Innenbereich 38. Beim hier gezeigten Beispiel ist der Innenbereich 38 bei beiden Endplatten 3, 4 mit einer Verrippung 39 versehen, die hier nur nach außen aufträgt, also nur vom Innenraum 7 nach außen abgewandte Rippen besitzt. Vorgesehen ist hier eine rechteckige Kreuz-Verrippung.

Beim Herstellen des Filterelements 1 werden zunächst die beiden Endplatten 3, 4 am Filterkörper 2 befestigt. Hierzu können die beiden Endplatten 3, 4 im jeweiligen Filterkörperbefestigungsbereich erwärmt werden, solange bis der Kunststoff hinreichend plastifiziert ist, um anschließend das Filtermaterial 6 darin einplastifizieren zu können. Vor dem Ansetzen der Stirnplatte 5 erfolgt nun eine Erwärmung der stirnseitigen Enden 15, 17 der beiden Endplatten 3, 4, der beiden Endplattenverbindungsbereiche 14, 16 und der beiden Endfaltenverbindungsbereiche 18, 19, jeweils soweit bis eine hinreichende Plastifizierung bzw. Verflüssigung erreicht ist. Anschließend wird die Stirnplatte 5 im Anschlussbereich 8 an die Enden 15, 17 der Endplatten 3, 4 und an die Enden 9, 10 des Filterkörpers 2 angesetzt, vorzugsweise angedrückt. Hierbei verschmelzen die stirnseitigen Enden 15, 17 der beiden Endplatten 3, 4 mit den beiden Endfaltenverbindungsbereichen 14, 16. Gleichzeitig werden die Endfalten 11, 12 in die Endfaltenverbindungsbereiche 18, 19 einplastifiziert.

Das Andrücken der Stirnplatte 5 kann in einem Werkzeug erfolgen, das die nach außen abstehenden Kragen 26, 27 der stirnseitigen Enden 15, 17 an einer von der Stirnplatte 5 abgewandten Seite unterstützt und das die beiden Endfalten 11, 12 sowie gegebenenfalls - je nach Faltung der jeweiligen Endfalte 11, 12 - auch die daran angrenzende vorletzte Falte an der von der Stirnplatte 5 abgewandten Seite unterstützt. Auch die Bereiche 18, 19 der Stirnplatte werden abgestützt.

Gemäß Figur 5 kann der jeweilige Endfaltenverbindungsbereich 18 bzw. 19 zumindest vor dem Anschmelzen eine dreidimensionale Aufschmelzkontur 40 aufweisen, die hier durch zackenförmige Erhebungen angedeutet ist. Diese Aufschmelzstruktur 40 kann beim Aufschmelzen und beim Andrücken der Stirnplatte 5 an den Filterkörper bzw. beim Einplastifizieren der jeweiligen Endfalte 11 in den jeweiligen Endfaltenverbindungsbereich 18 mehr oder weniger verloren gehen. Die Aufschmelzstruktur 40 kann durch Rillen oder Nocken und insbesondere im Spritzgusswerkzeug hergestellt sein.

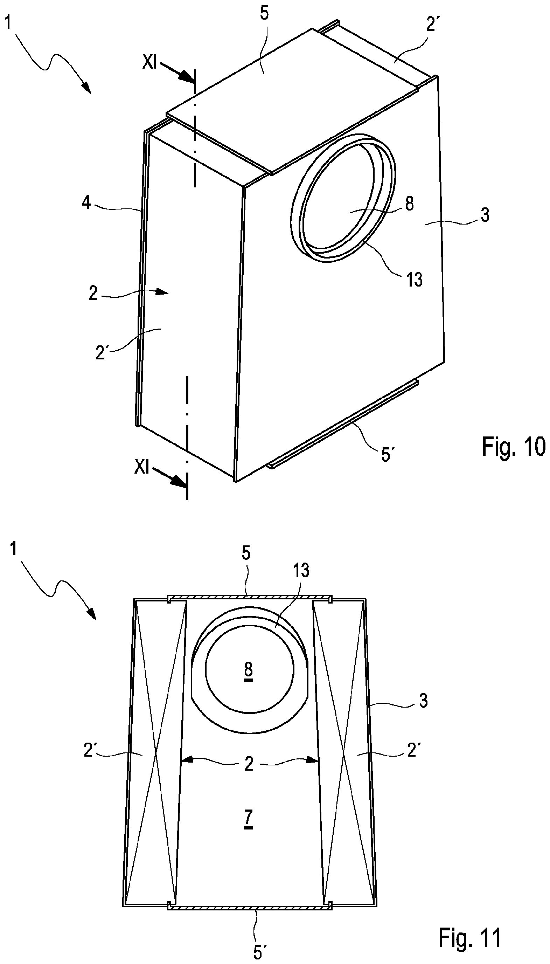

In den Fig. 10 und 11 ist ein anderes, nicht erfindungsgemäßes Filterelement 1 dargestellt. Gleiche Bauteile sind mit gleichen Bezugszeichen versehen. Das Filterelement 1 verfügt im Unterschied zu der in den Fig. 1 bis 9 gezeigten Ausführungsform über eine geschlossene Stirnscheibe 5' und eine erste Endplatte 3 mit einem Anschlussstutzen 13. Weiterhin ist in diesem Beispiel der Filterkörper 2 nicht U-förmig, sondern durch zwei voneinander getrennte Filterkörpersegmente 2' gebildet. Durch die Trennung des Filterkörpers 2 in wenigstens zwei Filterkörpersegmente 2' ist eine zusätzliche Stirnscheibe 5 vorgesehen, welche analog der ersten Stirnscheibe 5 mit dem Filterkörper 2 und den Endplatten 3, 4 verbunden ist. Die vorstehend beschriebenen Merkmale können äquivalent auf dieses Ausführungsbeispiel übertragen werden.

Die Teilung des Filterkörpers 2 in Filterkörpersegmente 2' kann bei anderen Ausgestaltungen auch mit einer Stirnscheibe 5 mit Anschluss kombiniert sein. Weiterhin ist es auch möglich, einen einteiligen Filterkörper 2 mit einer Endplatte 3 mit Anschlussstutzen 13 zu kombinieren. Auch können zwei Anschlussstutzen 13 vorgesehen sein, die beide an derselben Stirnscheibe 5, 5' oder an derselben Endplatte 3, 4 angeordnet sind, oder die jeweils an einer der Stirnseiten 5, 5' oder jeweils an einer der Endplatten 3, 4, oder von denen die eine der Stirnscheibe 5 oder 5' und die andere an der Endplatte 3 oder 4 angeordnet sind.

## Patentansprüche

1. Filterelement, insbesondere Luftfilterelement, für eine Frischluftanlage einer Brennkraftmaschine oder für eine Belüftungs- und/oder Klimatisierungseinrichtung eines Kraftfahrzeugs,
- mit einem Filterkörper (2) aus einem gefalteten Filtermaterial (6), der einen Innenraum (7) des Filterelements (1) bis auf einen Seitenbereich (8) seitlich einfasst,
- mit einer ersten Endplatte (3) und einer zweiten Endplatte (4), die an voneinander abgewandten Seiten am Filterkörper (2) dicht befestigt sind,
- mit einer Stirnplatte (5), die im Seitenbereich (8) angeordnet ist,
- wobei die Stirnplatte (5) einen der ersten Endplatte (3) zugewandten ersten Endplattenverbindungsbereich (14) aufweist, der mit einem der Stirnplatte (5) zugewandten stirnseitigen Ende (15) der ersten Endplatte (3) verschmolzen ist,
- wobei die Stirnplatte (5) einen der zweiten Endplatte (4) zugeordneten zweiten Endplattenverbindungsbereich (16) aufweist, der mit einem der Stirnplatte (5) zugewandten stirnseitigen Ende (17) der zweiten Endplatte (4) verschmolzen ist,
- wobei die Stirnplatte (5) einen einem ersten Ende (9) des Filterkörpers (2) zugeordneten ersten Endfaltenverbindungsbereich (18) aufweist, in den zumindest eine am ersten Ende (9) des Filterkörpers (2) ausgebildete erste Endfalte (11) einplastifiziert ist, und
- wobei die Stirnplatte (5) einen einem zweiten Ende (10) des Filterkörpers (2) zugeordneten zweiten Endfaltenverbindungsbereich (19) aufweist, in den zumindest eine am zweiten Ende (10) des Filterkörpers (2) ausgebildete zweite Endfalte (12) einplastifiziert ist,
**dadurch gekennzeichnet,**
- **dass** der erste Endplattenverbindungsbereich (14) an einem ersten Randbereich (21) der Stirnplatte (5) ausgebildet ist und einen vom ersten Randbereich (21) abstehenden Verbindungssteg (23) aufweist, der mit dem stirnseitigen Ende (15) der ersten Endplatte (3) axial verschmolzen ist, und
- **dass** der zweite Endplattenverbindungsbereich (16) an einem zweiten Randbereich (24) der Stirnplatte ausgebildet ist und einen vom zweiten Randbereich (24) abstehenden Verbindungssteg (23) aufweist, der mit dem stirnseitigen Ende (17) der zweiten Endplatte (4) axial verschmolzen ist.

2. Filterelement nach Anspruch 1,
**dadurch gekennzeichnet,**
- **dass** der erste Endfaltenverbindungsbereich (18) in einem der ersten Endplatte (3) zugewandten ersten Randbereich (28) radial mit der ersten Endplatte (3) verschmolzen ist, und/oder
- **dass** der erste Endfaltenverbindungsbereich (18) in einem der zweiten Endplatte (4) zugewandten zweiten Randbereich (29) radial mit der zweiten Endplatte (4) verschmolzen ist, und/oder
- **dass** der zweite Endfaltenverbindungsbereich (19) in einem der ersten Endplatte (3) zugewandten ersten Randbereich (30) radial mit der ersten Endplatte (3) verschmolzen ist, und/oder
- **dass** der zweite Endfaltenverbindungsbereich (19) in einem der zweiten Endplatte (4) zugewandten zweiten Randbereich (31) radial mit der zweiten Endplatte (4) verschmolzen ist.

3. Filterelement nach Anspruch 2,
**dadurch gekennzeichnet,**
- **dass** die ersten Randbereiche (28, 30) des ersten und zweiten Endfaltenverbindungsbereichs (18, 19) vom Verbindungssteg (23) des ersten Endplattenverbindungsbereichs (14) beabstandet sind, und/oder
- **dass** die zweiten Randbereiche (29, 31) des ersten und zweiten Endfaltenverbindungsbereichs (18, 19) vom Verbindungssteg (23) des zweiten Endplattenverbindungsbereichs (16) beabstandet sind.

4. Filterelement nach einem der Ansprüche 1 bis 3,
**dadurch gekennzeichnet,**
**dass** der erste Endfaltenverbindungsbereich (18) und/oder der zweite Endfaltenverbindungsbereich (19) ausgehend von der Stirnplatte (5) axial über den ersten Endplattenverbindungsbereich (14) und/oder den zweiten Endplattenverbindungsbereich (16) vorsteht/vorstehen.

5. Filterelement nach einem der Ansprüche 1 bis 4,
**dadurch gekennzeichnet,**
**dass** die beiden Endplatten (3, 4) im Bereich des Filterkörpers (2) voneinander einen Abstand (20) aufweisen, der kleiner ist als eine parallel zum Abstand (20) gemessene Öffnungsweite (35) des Anschlussstutzens (13).

6. Filterelement nach einem der Ansprüche 1 bis 5,
**dadurch gekennzeichnet,**
**dass** zumindest eine der Endplatten (3, 4) in einem der Stirnplatte (5) zugewandten Endbereich eine Ausbuchtung (36) aufweist, die vom Innenraum (7) nach außen von der übrigen Endplatte (3, 4) absteht.

7. Filterelement nach einem der Ansprüche 1 bis 6,
**dadurch gekennzeichnet,**
**dass** die jeweilige Endfalte (11, 12) eine Perforation (42) aufweist, die vom Kunststoff des jeweiligen Endfaltenverbindungsbereichs (18, 19) durchsetzt ist.

8. Verfahren zum Herstellen eines Filterelementes, insbesondere eines Luftfilterelements (1), nach einem der Ansprüche 1 bis 7,
- bei dem die Endplatten (3, 4) am Filterkörper (2) befestigt werden,
- bei dem vor dem Ansetzen der Stirnplatte (5) im Seitenbereich (8) die stirnseitigen Enden (15, 17) der Endplatten (3, 4), die ersten und zweiten Endplattenverbindungsbereiche (14, 16) und die ersten und zweiten Endfaltenverbindungsbereiche (18, 19) angeschmolzen werden,
- bei dem die Stirnplatte (5) im Seitenbereich (8) an die stirnseitigen Enden (15, 17) der Endplatten (3, 4) und an die Enden (9, 10) des Filterkörpers (2) angesetzt wird, so dass die Enden (15, 17) der Endplatten (3, 4) mit den ersten und zweiten Endfaltenverbindungsbereichen (14, 16) verschmelzen und die Endfalten (11, 12) des Filterkörpers (2) in die Endfaltenverbindungsbereiche (18, 19) einplastifizieren.

9. Verfahren nach Anspruch 8,
**dadurch gekennzeichnet,**
**dass** der jeweilige Endfaltenverbindungsbereich (18, 19) vor dem Aufschmelzen eine dreidimensionale Aufschmelzstruktur (40) aufweist.

10. Verfahren nach Anspruch 8 oder 9,
**dadurch gekennzeichnet,**
**dass** die jeweilige Endfalte (11, 12) eine Perforation (42) aufweist, die beim Ansetzen der Stirnplatte (5) vom Kunststoff des jeweiligen Endfaltenverbindungsbereichs (18, 19) durchsetzt wird.

11. Verfahren nach einem der Ansprüche 8 bis 10,
**dadurch gekennzeichnet,**
**dass** beim Ansetzen der Stirnplatte (5) zumindest die jeweilige Endfalte (11, 12) mittels eines Werkzeugs an einer von der Stirnplatte (5) abgewandten Rückseite unterstützt wird.

## Claims

1. A filter element, in particular an air filter element, for a fresh air system of an internal combustion engine or for a ventilation- and/or air-conditioning device of a motor vehicle,
- with a filter body (2) made of a folded filter material (6), that laterally surrounds an internal space (7) of the filter element (1), except in a lateral region (8),
- with a first end plate (3) and a second end plate (4), which are sealingly attached to the filter body (2) at sides that are facing away from one another,
- with a front plate (5) which is arranged in the lateral region (8),
- wherein the front plate (5) has a first end plate joining region (14) facing the first end plate (3), which end plate joining region is fused with a front-side end (15) of the first end plate (3) facing the front plate (5),
- wherein the front plate (5) has a second end plate joining region (16) assigned to the second end plate (4), which second end plate joining region is fused with a front-side end (17) of the second end plate (4) facing the front plate (5),
- wherein the front plate (5) has a first end fold joining region (18) assigned to a first end (9) of the filter body (2), into which end fold joining region at least one first end fold (11) is plasticized, said end fold being formed at the first end (9) of the filter body (2),
- wherein the front plate (5) has a second end fold joining region (19) assigned to a second end (10) of the filter body (2), into which end fold joining region at least one second end fold (12) is plasticized, said end fold being formed at the second end (10) of the filter body (2),
**characterized in that**
- the first end plate joining region (14) is formed on a first edge region (21) of the front plate (5) and has a connecting web (23) projecting from the first edge region (21), which connecting web is fused axially with the front-side end (15) of the first end plate (3), and
- that the second end plate joining region (16) is formed on a second edge region (24) of the front plate and has a connecting web (23) projecting from the second edge region (24), which connecting web is fused axially with the front-side end (17) of the second end plate (4).

2. The filter element according to Claim 1,
**characterized in that**
- the first end fold joining region (18) is fused radially with the first end plate (3) in a first edge region (28) facing the first end plate (3), and/or
- that the first end fold joining region (18) is fused radially with the second end plate (4) in a second edge region (29) facing the second end plate (4), and/or
- that the second end fold joining region (19) is fused radially with the first end plate (3) in a first edge region (30) facing the first end plate (3) and/or
- that the second end fold joining region (19) is fused radially with the second end plate (4) in a second edge region (31) facing the second end plate (4).

3. The filter element according to Claim 2,
**characterized in that**
- the first edge regions (28, 30) of the first and second end fold joining region (18, 19) are spaced apart from the connecting web (23) of the first end plate joining region (14), and/or
- that the second edge regions (29, 31) of the first and second end fold joining region (18, 19) are spaced apart from the connecting web (23) of the second end plate joining region (16).

4. The filter element according to one of Claims 1 to 3,
**characterized in that**
the first end fold joining region (18) and/or the second end fold joining region (19) project(s) axially over the first end plate joining region (14) and/or the second end plate joining region (16), proceeding from the front plate (5).

5. The filter element according to one of Claims 1 to 4,
**characterized in that**
the two end plates (3, 4) have, in the region of the filter body (2), a distance (20) from one another which is smaller than an opening width (35) of the connecting piece (13) measured parallel to the distance (20).

6. The filter element according to one of Claims 1 to 5,
**characterized in that**
at least one of the end plates (3, 4) has in an end region facing the front plate (5) a convexity (36) which projects from the internal space (7) outwards from the remaining end plate (3, 4).

7. The filter element according to one of Claims 1 to 6,
**characterized in that**
the respective end fold (11, 12) has a perforation (42), which is penetrated by the plastic of the respective end fold joining region (18, 19).

8. A method for producing a filter element, in particular an air filter element (1), according to one of Claims 1 to 7,
- in which the end plates (3, 4) are fastened on the filter body (2),
- in which before the placing of the front plate (5) in the lateral region (8) the front-side ends (15, 17) of the end plates (3, 4), the first and second end plate joining regions (14, 16) and the first and second end fold joining regions (18, 19) are fused,
- in which the front plate (5) in the lateral region (8) is placed against the front-side ends (15, 17) of the end plates (3, 4) and against the ends (9, 10) of the filter body (2), so that the ends (15, 17) of the end plates (3, 4) fuse with the first and second end fold joining regions (14, 16) and the end folds (11, 12) of the filter body (2) plasticize into the end fold joining regions (18, 19).

9. The method according to Claim 8,
**characterized in that**
before fusing, the respective end fold joining region (18, 19) has a three-dimensional fusing structure (40).

10. The method according to Claim 8 or 9,
**characterized in that**
the respective end fold (11, 12) has a perforation (42), which on placing of the front plate (5) is penetrated by the plastic of the respective end fold joining region (18,19).

11. The method according to one of Claims 8 to 10,
**characterized in that**
on placing of the front plate (5) at least the respective end fold (11, 12) is supported by means of a tool on a rear side, facing away from the front plate (5).

## Revendications

1. Elément de filtre, en particulier élément de filtre à air, pour une installation d'air frais d'un moteur à combustion interne ou pour un dispositif de ventilation et/ou de climatisation d'un véhicule automobile,
- avec un corps de filtre (2) composé d'un matériau de filtre (6) plié, qui renferme de manière latérale un espace intérieur (7) de l'élément de filtre (1) à l'exception d'une zone latérale (8),
- avec une première plaque d'extrémité (3) et une deuxième plaque d'extrémité (4), qui sont fixées de manière étanche au niveau de côtés, opposés les uns aux autres, au niveau du corps de filtre (2),
- avec une plaque frontale (5), qui est disposée dans la zone latérale (8),
- dans lequel la plaque frontale (5) présente une première zone de liaison de plaques d'extrémité (14) tournée vers la première plaque d'extrémité (3), laquelle est fondue avec une extrémité (15), située côté frontal tournée vers la plaque frontale (5), de la première plaque d'extrémité (3),
- dans lequel la plaque frontale (5) présente une deuxième zone de liaison de plaques d'extrémité (16) tournée vers la deuxième plaque d'extrémité (4), laquelle est fondue avec une extrémité (17), située côté frontal tournée vers la plaque frontale (5), de la deuxième plaque d'extrémité (4),
- dans lequel la plaque frontale (5) présente une première zone de liaison de plissements d'extrémité (18) associée à une première extrémité (9) du corps de filtre (2), dans laquelle au moins un premier plissement d'extrémité (11) réalisé au niveau de la première extrémité (9) du corps de filtre (2) est plastifié, et
- dans lequel la plaque frontale (5) présente une deuxième zone de liaison de plissements d'extrémité (19) associée à une deuxième extrémité (10) du corps de filtre (2), dans laquelle au moins un deuxième plissement d'extrémité (12) réalisé au niveau de la deuxième extrémité (10) du corps de filtre (2) est plastifié,
**caractérisé en ce**
- **que** la première zone de liaison de plaques d'extrémité (14) est réalisée au niveau d'une première zone de bord (21) de la plaque frontale (5) et présente, dépassant de la première zone de bord (21), une traverse de liaison (23), qui est fondue de manière axiale avec l'extrémité (15) située côté frontal de la première plaque d'extrémité (3), et
- **que** la deuxième zone de liaison de plaques d'extrémité (16) est réalisée au niveau d'une deuxième zone de bord (24) de la plaque frontale et présente, dépassant de la deuxième zone de bord (24), une traverse de liaison (23) qui est fondue de manière axiale avec l'extrémité (17) située côté frontal de la deuxième plaque d'extrémité (4).

2. Elément de filtre selon la revendication 1,
**caractérisé en ce**
- **que** la première zone de liaison de plissements d'extrémité (18) est fondue de manière radiale avec la première plaque d'extrémité (3) dans une première zone de bord (28) tournée vers la première plaque d'extrémité (3), et/ou
- **que** la première zone de liaison de plissements d'extrémité (18) est fondue de manière radiale avec la deuxième plaque d'extrémité (4) dans une deuxième zone de bord (29) tournée vers la deuxième plaque d'extrémité (4), et/ou
- **que** la deuxième zone de liaison de plissements d'extrémité (19) est fondue de manière radiale avec la première plaque d'extrémité (3) dans une première zone de bord (30) tournée vers la première plaque d'extrémité (3), et/ou
- **que** la deuxième zone de liaison de plissements d'extrémité (19) est fondue de manière radiale avec la deuxième plaque d'extrémité (4) dans une deuxième zone de bord (31) tournée vers la deuxième plaque d'extrémité (4).

3. Elément de filtre selon la revendication 2,
**caractérisé en ce**
- **que** les premières zones de bord (28, 30) de la première et de la deuxième zone de liaison de plissements d'extrémité (18, 19) sont espacées de la traverse de liaison (23) de la première zone de liaison de plaques d'extrémité (14), et/ou
- **que** les deuxièmes zones de bord (29, 31) de la première et de la deuxième zone de liaison de plissements d'extrémité (18, 19) sont espacées de la traverse de liaison (23) de la deuxième zone de liaison de plaques d'extrémité (16).

4. Elément de filtre selon l'une quelconque des revendications 1 à 3,
**caractérisé en ce**
**que** la première zone de liaison de plissements d'extrémité (18) et/ou la deuxième zone de liaison de plissements d'extrémité (19) fait/font saillie, en partant de la plaque frontale (5), de manière axiale de la première zone de liaison de plaques d'extrémité (14) et/ou de la deuxième zone de liaison de plaques d'extrémité (16).

5. Elément de filtre selon l'une quelconque des revendications 1 à 4,
**caractérisé en ce**
**que** les deux plaques d'extrémité (3, 4) présentent, dans la zone du corps de filtre (2), une distance (20) l'une de l'autre, qui est inférieure à une largeur d'ouverture (35), mesurée de manière parallèle par rapport à la distance (20), de la tubulure de raccordement (13).

6. Elément de filtre selon l'une quelconque des revendications 1 à 5,
**caractérisé en ce**
**qu'**au moins une des plaques d'extrémité (3, 4) présente, dans une zone d'extrémité tournée vers la plaque frontale (5), un renflement (36), qui dépasse de l'espace intérieur (7) vers l'extérieur de la plaque d'extrémité (3, 4) restante.

7. Elément de filtre selon l'une quelconque des revendications 1 à 6,
**caractérisé en ce**
**que** le plissement d'extrémité (11, 12) respectif présente une perforation (42), qui est traversée par la matière plastique de la zone de liaison de plissements d'extrémité (18, 19) respective.

8. Procédé servant à fabriquer un élément de filtre, en particulier un élément de filtre à air (1), selon l'une quelconque des revendications 1 à 7,
- dans lequel les plaques d'extrémité (3, 4) sont fixées au niveau du corps de filtre (2),
- dans lequel avant de placer la plaque frontale (5) dans la zone latérale (8), les extrémités (15, 17) situées côté frontal des plaques d'extrémité (3, 4), les première et deuxième zones de liaison de plaques d'extrémité (14, 16) et les première et deuxième zones de liaison de plissements d'extrémité (18, 19) sont fondues,
- dans lequel la plaque frontale (5) est placée dans la zone latérale (8) au niveau des extrémités (15, 17) situées côté frontal des plaques d'extrémité (3, 4) et au niveau des extrémités (9, 10) du corps de filtre (2) de sorte que les extrémités (15, 17) des plaques d'extrémité (3, 4) soient fondues avec les première et deuxième zones de liaison de plissements d'extrémité (14, 16) et les plissements d'extrémité (11, 12) du corps de filtre (2) sont plastifiés dans les zones de liaison de plissements d'extrémité (18, 19).

9. Procédé selon la revendication 8,
**caractérisé en ce**
**que** la zone de liaison de plissements d'extrémité (18, 19) respective présente avant la fusion une structure de fusion (40) tridimensionnelle.

10. Procédé selon la revendication 8 ou 9,
**caractérisé en ce**
**que** le plissement d'extrémité (11, 12) respectif présente une perforation (42), qui est traversée, lors du placement de la plaque frontale (5), par la matière plastique de la zone de liaison de plissements d'extrémité (18, 19) respective.

11. Procédé selon l'une quelconque des revendications 8 à 10,
**caractérisé en ce**
**que** lors de la pose de la plaque frontale (5), au moins le plissement d'extrémité (11, 12) respectif est soutenu au moyen d'un outil au niveau d'un côté arrière opposé à la plaque frontale (5).
